# EUROPEAN PATENT SPECIFICATION

(11) **EP 0 281 756 B1**
(45) Date of publication and mention of the grant of the patent: **21.04.1993**
(21) Application number: 88101467.4
(22) Date of filing: 02.02.1988
(51) Int. Cl.: G11B 7/12, G11B 7/135, G02B 13/10

(54) **Holographic objective mirrors for optical storage**
Holographische Objektivspiegel für optische Speicherung
Miroir holographique d'objectif pour mémoire optique

(30) Priority: 13.03.1987 US 25691
(43) Date of publication of application: 14.09.1988
(73) Proprietor: International Business Machines Corporation, Armonk, N.Y. 10504 (US)
(72) Inventor: Latta, Milton Russell, San Jose California 95139 (US); Strand, Timothy Carl, San Jose California 95120 (US)
(74) Representative: Moss, Robert Douglas

(56) References cited:
- EP-A- 0 123 048
- US-A- 4 004 081
- US-A- 4 440 839
- ELECTRONICS & COMMUNICATIONS IN JAPAN vol. 70, no. 1, January 1987, Silver Spring, Maryland, USA, Shogo Ura & al.: "Focusing grating for integrated optical-disk pick-up device"
- OPTIK Zeitschrift für Licht- and Elektronenoptik vol. 65, no. 1, 1983, Stuttgart pages 49 - 61; I.Weingärtner: "A holographic mirror objective"
- Optical Engineering vol. 24, no. 5, October 1985, Bellingham, USA pages 769 - 780; José R. Magarinos: "Holographic mirrors"

## Description

The present invention deals with holographic objective mirrors for use in an optical storage head.

In the current state of the art, an objective lens and a folding mirror are used to focus a light beam onto an optical recording medium.

SPIE Vol. 237, 1980, International lens Design Conference (OSA), pp. 439-445, shows the use of concave aberration corrected holographic gratings to diffract and focus.

U.S. Patent No. 4,004,081 shows a parabolic mirror which simultaneously performs the functions of focusing device and deflection mirror.

U.S. Patent No. 4,203,652 shows a beam of light from a semiconductor laser having different angles of divergence and different origins of divergence being collimated or efficiently turned into a circular spot light be a beam shaping optical system.

Optical Engineering, Sept/Oct. 1985 , Vol 24, No. 5, pages 769 - 780 shows the use of a special holographic mirror to focus light as an optical element. The reflection on such a holographic mirror is not a physical reflection effect but a diffraction of light.

According to the present invention, there is provided, an optical data storage system in which data is stored along tracks on an optical storage medium, the system comprising an optical storage medium including a plurality of tracks, a mirror and a laser source for providing a light beam parallel to the plane of the medium, the beam approaching the region of the mirror tangential to the track direction, characterised in that the laser source provides an elliptical incident beam having its minor axis perpendicular to the plane of the medium and the mirror is an anamorphic holographic mirror arranged to transform the elliptical incident beam into a circular beam without further optical elements.

Also provided is an optical storage head for use in an optical data storage system having a laser source, the head comprising a mirror for reflecting and focusing light from the laser source onto an optical storage medium characterised in that said laser source provides an elliptical beam, the mirror is an anamorphic holographic mirror capable of transforming such an elliptical beam incident upon the mirror into a circular beam without further optical elements.

In an embodiment of the present invention disclosed hereinafter, the optical arrangement of the storage system comprises laser means for generating an elliptical beam, means for directing the laser beam, at incidence, in a direction tangential to the track direction on the optical medium, to a holographic mirror which diffracts the laser beam perpendicularly to the optical medium and which also focuses the beam onto the optical medium and circularises the beam.

The present invention will be described further by way of example with reference to an example of the prior art and an embodiment of the invention as illustrated in the accompanying drawings, in which:
Fig. 1A is a schematic representation (not to scale) of a conventional system using a folding mirror and a focusing objective lens;
Fig. 1B is a schematic representation (not to scale) of the present invention, showing a holographic objective mirror used in an optical storage head; and
Figs. 2A and 2B show two variations of the present invention, Fig. 2A being a schematic representation (not to scale) which shows the use of a swing-arm arrangement to produce the required input beam direction, and Fig. 2B being a schematic representation (not to scale) which shows a sled-type actuator having an additional folding mirror to bend the beam parallel to the track direction.

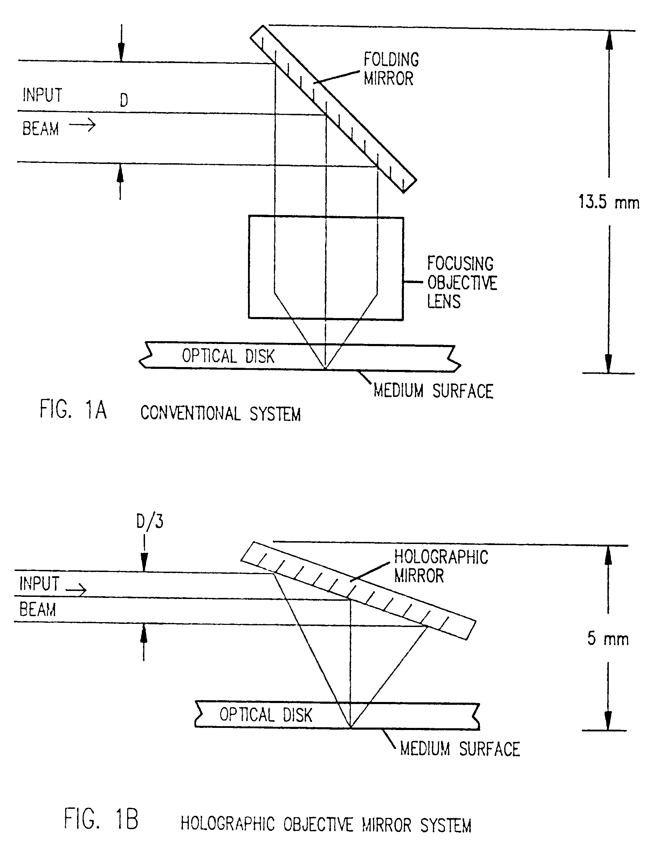

According to the present invention, the conventional objective lens and folding mirror in an optical storage head are both replaced by a reflective holographic mirror. In the conventional system, as shown in Fig. 1A, the beam is incident from the left. The beam strikes the 45 degree folding mirror, passes through the objective lens and is focused onto the optical medium. In the present invention, as shown in Fig. 1B, the functions of the folding mirror and objective lens are combined. The beam striking the holographic mirror is diffracted perpendicularly downward to the optical medium and, through proper design of the hologram, may be focused to a diffraction limited spot as well.

As can be seen, the perpendicular height required above the optical medium in the disclosed arrangement is considerably reduced compared to the prior art. This is due to several factors:
A. The incident beam is reduced in the dimension shown and the plano surface of the hologram substrate is inclined as shown. (Note: this would not work with a conventional mirror as the reflected beam would no longer be perpendicular to the optical media. However, the flexibility of holographic design permits the diffracted beam from the hologram to be directed in a non-specular direction as shown.)
B. The optical focusing function is built into the (planar) reflective hologram. Thus, the physical thickness of the objective lens needed to provide optical geometry is eliminated, the requirement here being the actual thickness of the optically active layer and any substrate required to support it, both able to be flat.
C. The additional clearance required between the mirror surface and objective lens for mounting is also eliminated. An approximation to the space savings possible is shown in the figure with the height reduced from 13.5 mm to 5 mm.

A second advantage of the disclosed arrangement is the elimination of the objective lens mass. The mass of the holographic mirror should be commensurate to that of any folding mirror used in the conventional system since the hologram itself can be fabricated using metallised photoresist and, thus, the major mass contribution is virtually that of the substrate. Typical mass savings would be .34 grams due to elimination of the objective lens.

A third advantage is the elimination of the beam circulariser used in conventional systems. The elliptically shaped beam coming from the collimator may be used as is in the holographic system. This is achieved by making the hologram anamorphic, that is such that image formation occurs on different scales in the horizontal and vertical directions, producing an image squeezed in one plane. A typical ellipticity ration of 3:1 is suitable as input to the holographic mirror which is used with the minor axis of the incident elliptical beam perpendicular to the plane of the disc to achieve the height reduction. This allows the height reduction described and eliminates the need to expand the beam in the narrow direction to produce a circular cross-section.

Another feature of this holographic system is that it is possible to produce a non-normal illumination system through the inherent design flexibility of the holographic element. Thus, when it is desired to have separate beam paths for incident and collected light from the optical disk (with an angular separation between them rather than coincident beams incident perpendicular to the disk) for the purposes of laser noise reduction, for instance, that design flexibility is possible with this system.

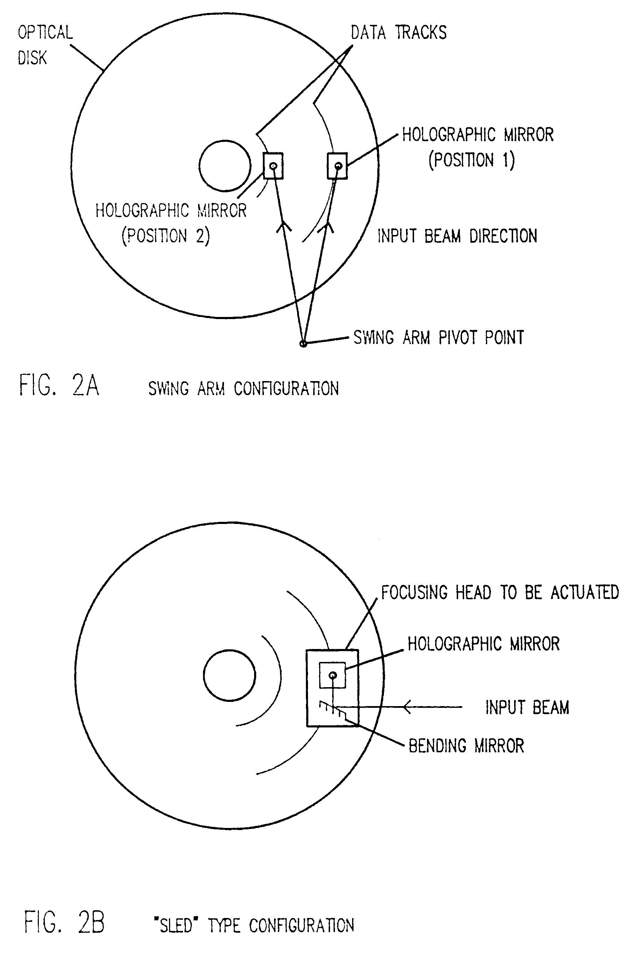

A requirement of the holographic system is that the input beam direction is tangential to the track direction on the optical disk. This is required because as the laser frequency fluctuates, the deflection angle induced by the holographic element will experience a corresponding fluctuation. This, in turn, results in displacement of the focused spot on the disk surface. It would be undesirable to have this beam displacement occur across the track and would probably not be objectionable to have it occur along the track as this only produces a small data rate error in the magneto-optical signal. Implementations to satisfy this requirement are shown in Fig. 2. Fig. 2A shows the use of a swing-arm arrangement to produce the required input beam direction and 2B shows a sled-type actuator which has an additional folding mirror to bend the beam parallel to the track direction.

In recent times, gallium arsenide lasers have become extensively used. The present invention is particularly useful in conjunction with such lasers since they inherently produce collimated beams of elliptical cross-section. The holographic mirror of the disclosed system causes circularisation of the collimated beam having an elliptical cross-section but takes advantage of the input beam ellipticity to reduce the physical "height of the optical system. It is thus seen that in the present invention, there is achieved the combination of circularisation, diffraction and focusing functions into a single element. The non-specular diffraction from a hologram leading to circularisation is believed to be unique in the present context.

## Claims

1. An optical data storage system in which data is stored along tracks on an optical storage medium, the system comprising:
an optical storage medium including a plurality of tracks;
a mirror; and
a laser source for providing a light beam parallel to the plane of said medium, said beam approaching the region of said mirror tangential to the track direction;
characterised in that
said laser source provides an elliptical incident beam having its minor axis perpendicular to the plane of the medium; and
said mirror is an anamorphic holographic mirror arranged to transform said elliptical incident beam into a circular beam without further optical elements

2. An optical data storage system as claimed in claim 1, wherein said laser source for generating the incident optical beam is a gallium arsenide laser.

3. An optical storage head for use in an optical data storage system having a laser source, the head comprising:
a mirror for reflecting and focusing light from the laser source onto an optical storage medium;
characterised in that
said laser source provides an elliptical beam, said mirror is an anamorphic holographic mirror capable of transforming such an elliptical beam incident upon said mirror into a circular beam without further optical elements.

## Patentansprüche

1. Optisches Datenspeichersystem, bei welchem Daten auf einem optischen Speichermeidum längs Spuren gespeichert sind, wobei das System aufweist:
ein optisches Speichermedium mit einer Mehrzahl von Spuren,
einen Spiegel und
eine Laserquelle, die einen Lichtstrahl parallel zur Ebene des Mediums liefert, wobei dieser im Bereich des Spiegels tangential zur Spurrichtung herankommt,
dadurch gekennzeichnet, daß
die Laserquelle einen elliptischen einfallenden Strahl liefert, dessen kleine Achse normal zu der der Ebene des Mediums liegt, und
der Spiegel ein anamorphotischer holographischer Spiegel ist, der dazu eingerichtet ist, den elliptischen einfallenden Strahl ohne weitere optische Elemente in einen kreisförmigen Strahl zu transformieren.

2. Optisches Datenspeichersystem nach Anspruch 1, bei welchem die Laserquelle zur Erzeugung des einfallenden optischen Strahls ein Galliumarsenid-Laser ist.

3. Optischer Speicherkopf zur Verwendung in einem optischen Datenspeichersystem mit einer Laserquelle, wobei der Kopf enthält:
einen Spiegel, um Licht der Laserquelle auf ein optisches Speichermedium zu reflektieren und zu fokussieren,
dadurch gekennzeichnet, daß
die Laserquelle einen elliptischen Strahl liefert und der Spiegel ein anamorphotischer holographischer Spiegel ist, welcher einen solchen elliptischen, auf den Spiegel einfallenden Strahl ohne weitere optische Elemente in einen kreisrunden Strahl transformieren kann.

## Revendications

1. Système de mémoire optique de données dans lequel des données sont stockées le long de pistes sur un support de stockage optique, le système comprenant :
un support de stockage optique comportant une pluralité de pistes ;
un miroir ; et
une source laser pour fournir un faisceau de lumière parallèle au plan dudit support, ledit faisceau approchant de la région dudit miroir dans une direction tangentielle à la direction de piste ;
caractérisé en ce que
ladite source laser fournit un faisceau incident elliptique dont le petit axe est perpendiculaire au plan du support ; et
ledit miroir est un miroir holographique à anamorphose prévu pour transformer ledit faisceau incident elliptique en un faisceau circulaire, sans autres éléments optiques.

2. Système de mémoire optique de données suivant la revendication 1, dans lequel ladite source laser pour engendrer le faisceau optique incident est un laser à l'arséniure de gallium.

3. Tête pour mémoire optique utilisable dans un système de mémoire optique de données comportant une source laser, la tête comprenant :
un miroir pour réfléchir et focaliser la lumière venant de la source laser sur un support de stockage optique ;
caractérisée en ce que
ladite source laser fournit un faisceau elliptique, ledit miroir est un miroir holographique à anamorphose capable de transformer un tel faisceau elliptique incident sur ledit miroir en un faisceau circulaire, sans autres éléments optiques.
